(19) Europäisches Patentamt
European Patent Office
Office européen des brevets

(11) **EP 4 393 886 A1**

(12) **EUROPEAN PATENT APPLICATION**

(43) Date of publication:
**03.07.2024 Bulletin 2024/27**

(21) Application number: **22216690.2**

(22) Date of filing: **27.12.2022**

(51) International Patent Classification (IPC):
**C01G 53/00** (2006.01) **C01G 53/04** (2006.01)
**H01M 4/525** (2010.01)

(52) Cooperative Patent Classification (CPC):
**C01G 53/04; C01G 53/006; C01G 53/42;
C01G 53/50; H01M 4/505; H01M 4/525;**
C01P 2004/50; C01P 2004/51; C01P 2004/61;
C01P 2006/11; C01P 2006/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Umicore Finland OY
67900 Kokkola (FI)**

(72) Inventors:
• **RÄSÄNEN, Samuli**
**Kokkola (FI)**
• **DONG, Jiachen**
**Kokkola (FI)**

• **FRÄNTI, Arto**
**Kokkola (FI)**
• **HASSINEN, Ville**
**Kokkola (FI)**
• **KANKAANPÄÄ, Timo**
**Kokkola (FI)**
• **MARJELUND, Janne**
**Kokkola (FI)**
• **NIITTYKOSKI, Janne**
**Kokkola (FI)**
• **VEHKAMÄKI, Ville**
**Kokkola (FI)**

(74) Representative: **Umicore RDI Patent Department
Watertorenstraat 33
2250 Olen (BE)**

(54) **METHOD FOR MANUFACTURING AQUEOUS SLURRY AND METHOD FOR MANUFACTURING POWDEROUS HYDROXIDE THEREFROM**

(57) Generally, the present invention relates to metal hydroxides that can be used as precursors to cathode active materials for secondary batteries and methods of manufacture thereof. Particularly, however not exclusively, the present invention concerns methods for manufacturing an aqueous slurry comprising hydroxide or oxyhydroxide of at least one or more metal elements, methods for manufacturing powderous hydroxide or oxyhydroxide therefrom, and use of the aqueous slurry or the powderous hydroxide or oxyhydroxide for manufacturing a positive electrode active material for secondary batteries.

Figure 1

EP 4 393 886 A1

## Description

### Technical field

Generally, the present invention relates to metal hydroxides that can be used as precursors to cathode active materials for secondary batteries and methods of manufacture thereof. Particularly, however not exclusively, the present invention concerns methods for manufacturing an aqueous slurry comprising hydroxide or oxyhydroxide of at least one or more metal elements, methods for manufacturing powderous hydroxide or oxyhydroxide therefrom, and use of the aqueous slurry or the powderous hydroxide or oxyhydroxide for manufacturing a positive electrode active material for secondary batteries.

### Background

Lithium-ion secondary batteries typically include a negative electrode (anode), an electrolyte, and a positive electrode (cathode) that contains a lithium-transition metal oxide as an active material capable of insertion and desorption of lithium. lithium-transition metal oxides are generally manufactured from transition-metal hydroxides, oxides or oxyhydroxide manufactured in turn in co-precipitation processes that disclose admixing of a metal salt solution and an alkali solution with the existence of a complexing agent.

It is expected that in the future the lithium-ion battery market will be increasingly dominated by automotive applications. To be competitive, batteries for automotive applications must be produced at the lowest possible cost. A significant fraction of the cost comes from the active material, and the costs of precursor is reflected into those of the active material. Providing these precursors by a more efficient and/or cheaper process, ideally without compromising the quality thereof, can help to lower cost and boost market acceptance of lithium-ion secondary batteries.

In view of above, there is a constant need for further improvements in the manufacturing process of precursors.

### Summary

The present invention aims to provide improved methods for making materials which may subsequently be used directly/indirectly as precursors of Lithium transition metal cathode materials for positive electrodes.

Viewed from a first aspect, the invention can provide a method for manufacturing an aqueous slurry comprising hydroxide or oxyhydroxide particles of one or more elements, wherein the one or more elements include at least one of Ni, Co and Mn. The hydroxide or oxyhydroxide particles can either be used as a seed particles source in a precipitation process of a second hydroxide or oxyhydroxide, which in turn can serve, ultimately, as precursors of Lithium transition metal cathode materials for positive electrodes, or be used as precursors of Lithium transition metal cathode active materials for positive electrodes. Such a method according to the present invention comprises providing a volume of a seed slurry V(1) into a reactor vessel having an effective volume V(2), wherein the seed slurry comprises seeds having a median particle size d50 = D1, and the seed slurry has a solid content of seeds SG(1) expressed as weight of seeds per volume of the seed slurry, and subsequently comprises:

- supplying a flow of an aqueous metal salt solution comprising the one or more elements to a reactor vessel during a time period,
- during the time period, mixing the metal salt solution with an aqueous solution comprising one or more alkali hydroxides, thereby precipitating the hydroxide or oxyhydroxide of the one or more elements and forming the aqueous slurry comprising the hydroxide or oxyhydroxide particles of the one or more elements,

wherein the supplying the amount of the seed slurry is based on equation 1:

$$V(1) = \frac{V(2) \times SG(2) \times D_1^3}{SG(1) \times D_2^3} \qquad (equation\ 1)$$

wherein SG(2) is a target solid content of the aqueous slurry expressed as weight per volume, and $D_2$ is a target median particle size of the hydroxide or oxyhydroxide particles expressed in $\mu$m.

The hydroxide or oxyhydroxide particles of the one or more elements according to the present invention have a composition that can be presented by a general formula: $Me\text{-}O_x(OH)_{2\text{-}x}$, wherein $0 \leq x \leq 2$, and Me includes at least one of the Ni, Co and Mn, and possibly at least one other element like an impurity such as Na, S, etc.

By the effective volume of the reactor vessel in this document it is meant a maximum volume of a reaction mixture, i,e. the aqueous slurry, that can fit into the reactor vessel during the precipitation reaction/process.

The time period may be denoted as T1-T2, referring a progress of time starting at time T1, i.e. at the beginning of the time period, and ending at time T2, i.e. at the end of the time period.

According to the method of the present invention, the process is better controlled and predictable and able to be easily tailored according to actual needs of, for example, desirable median particle size of the hydroxide or oxyhydroxide particles. Also, according to the method, further nucleation is avoided. Further nucleation is less desirable as it may lead to formation of small particles that tend to agglomerate, which in turn varies the production quality. Furthermore, the hydroxide or oxyhydroxide particles produced according to the method have homogeneously distributed desired particle size.

Further, the present invention enables using the same seed slurry source regardless of what the desired target median size of the precipitated hydroxide or oxyhydroxide particles is. It further enables a better controllability and scalability for a precipitation process compared to known methods in which various trial and error attempts may be needed for obtaining a working process for desired-sized hydroxide or oxyhydroxide particles. Still a further advantage over the known methods is that it improves an efficiency per reactor vessel of a plant manufacturing metal hydroxides for cathode active materials since splitting the reaction mixture into various reactor vessels is not necessary to obtain desired-sized particles within a reasonable time.

Thus, the invention provides an improved method to a precipitation process of metal hydroxide which is used as a precursor to a cathode active material. The precipitation process may typically include supplying an aqueous metal salt solution, a neutralizing agent such as alkali hydroxide, and a complexing agent such as an ammonium ion donor to a reaction vessel while stirring, and performing a crystallization reaction.

Following the concept of the first aspect of the present invention, it is also provided a second aspect of the invention, being a method for manufacturing a powderous hydroxide or oxyhydroxide of one or more elements, wherein the method comprises I) providing an aqueous slurry according to the first aspect of the invention, II) separating the hydroxide or oxyhydroxide particles from a liquid fraction of the aqueous slurry and III) drying the separated hydroxide or oxyhydroxide particles.

It is further provided a third aspect of the invention, being a use of an aqueous slurry according to the first aspect of the invention or a powderous hydroxide or oxyhydroxide according to the second aspect of the invention for manufacturing a positive electrode active material for secondary batteries.

It is further provided a forth aspect of the invention, being a method for manufacturing a positive electrode active material by using the hydroxide or oxyhydroxide particles manufactured according to first and second aspects of the invention.

Various embodiments according to the present invention are disclosed in the claims as well as in the description. The embodiments and examples recited in the claims and in the description are mutually freely combinable unless otherwise explicitly stated. Throughout the entire document, if any numerical ranges are provided, the ranges include also the endpoint values unless otherwise explicitly stated.

**Brief description of the drawings**

By means of further guidance, a figure is included to better appreciate the teaching of the present invention, wherein:

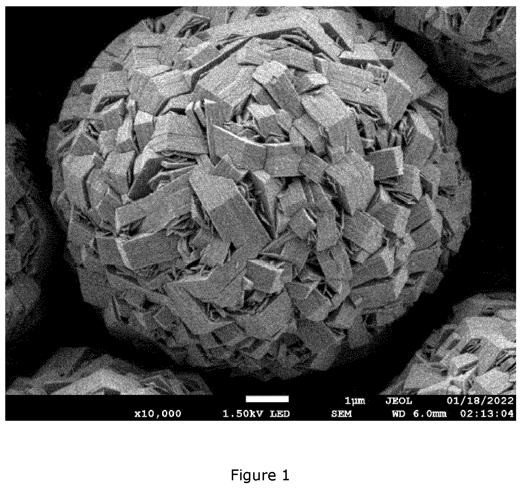

Fig. 1    shows a scanning electron microscope (SEM) image of particles obtained from Example 1, example 1.2.

**Detailed description**

In the following detailed description, preferred embodiments are described in detail to enable practice of the invention. Although the invention is described with reference to these specific preferred embodiments, it will be understood that the invention is not limited to these preferred embodiments. To the contrary, the invention includes numerous alternatives, modifications and equivalents as will become apparent from consideration of the following detailed description and accompanying drawings.

The term "comprising", as used herein and in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present invention, the only relevant components of the composition are A and B. Accordingly, the terms "comprising" and "including" encompass the more restrictive terms "consisting essentially of" and "consisting of".

The term "a positive electrode active material" (also known as cathode active material) as used herein and in the claims is defined as a material which is electrochemically active in a positive electrode or cathode. By active material, it must be understood to be a material capable to capture and release Li ions when subjected to a voltage change over a predetermined period of time.

The term "a positive electrode" as used herein is defined as a material comprising a positive electrode active material also in addition to other components which are not electrochemically active, in particular conductivity agents such as carbon black or binders such as PVDF.

The term "concentration of $NH_{3(aq)}$" or the like as used herein means the concentration of ammonia in an aqueous solution.

In a first aspect, the invention provides a method for manufacturing an aqueous slurry comprising hydroxide or oxyhydroxide particles of one or more elements, wherein the one or more elements include at least one of Ni, Co and Mn. The hydroxide or oxyhydroxide particles can either be used as a seed particles source in a precipitation process of a second hydroxide or oxyhydroxide, which in turn can serve, ultimately, as precursors of Lithium transition metal cathode materials for positive electrodes, or be used as precursors of Lithium transition metal cathode active materials for positive electrodes. Such a method according to the present invention comprises providing a volume of a seed slurry V(1) into a reactor vessel having an effective volume V(2), wherein the seed slurry comprises seeds having a median particle size d50 = D1, and the seed slurry has a solid content of seeds SG(1) expressed as weight of seeds per volume of the seed slurry, and subsequently comprises:

- supplying a flow of an aqueous metal salt solution comprising the one or more elements to a reactor vessel for a time period T1-T2,
- during the time period T1-T2, mixing the metal salt solution with an aqueous solution comprising one or more alkali hydroxides, thereby precipitating the hydroxide of the one or more elements and forming the aqueous slurry comprising the hydroxide or oxyhydroxide particles of the one or more elements,

wherein the supplying the amount of the seed slurry is based on equation 1:

$$V(1) = \frac{V(2) \times SG(2) \times D_1^3}{SG(1) \times D_2^3} \qquad (equation\ 1)$$

wherein SG(2) is a target solid content of the aqueous slurry expressed as weight per volume, and $D_2$ is a target median particle size of the hydroxide or oxyhydroxide particles.

According to the method of the present invention, the precipitation process may be better controlled and scaled, more predictable, and able to be easily tailored according to actual needs.

During the course of manufacturing process, the precipitated hydroxide may be partially oxidized, depending on the atmosphere of the manufacturing process. Thus, the aqueous slurry may contain oxyhydroxide. It is to be noted that an atmospheric condition is not essential to achieve the claimed invention.

In some embodiments, wherein a range of pH value of the aqueous slurry in the reactor vessel is between 11.5 to 12.2, and more preferably between 11.6 to 12.1, wherein the pH of the aqueous slurry is the pH as measured on a sample of the aqueous slurry at 20°C. In some embodiments, the pH value is in a range of 10.5 to 12.0, preferably 11.0 to 12.0, within said ranges, nucleation process of new nuclei may be prevented while growing of precipitate particles existing in the reactor vessel may be ensured. As appreciated by the skilled person the pH value can be measured by using a pH meter, for example 780 Metrohm meter.

In some embodiments of the method according to the present invention further comprises, during the time period T1-T2, establishing or maintaining in the reactor vessel, a concentration of $NH_{3(aq)}$ of at least 1.0 g/l and preferably at most 13.0 g/l. By establishing or maintaining it is meant, that an aqueous solution of ammonia ($NH_{3(aq)}$) may be provided in the reaction vessel as a starting solution prior to the beginning of the time period T1, and additionally or alternatively, an aqueous solution of ammonia ($NH_{3(aq)}$) may be supplied to the reaction vessel during the time period T1-T2. A $NH_{3(aq)}$ concentration lower than 1.0 g/l may result in nucleation. A higher $NH_{3(aq)}$ concentration, for example higher than 13.0 g/l, may result in agglomeration, when the particle size of the precipitated hydroxide in the reactor is relatively small, for example less than 4 $\mu$m or less than 3 $\mu$m, and thus under such circumstance, preferably the concentration of $NH_{3(aq)}$ is at least 1.5 g/l and at most 7 g/l, more preferably at least 1.5 g/l and at most 6 g/l, and most preferably at least 2 g/l and at most 4 g/l. On the other hand, when the particle size of the precipitated hydroxide in the reactor is relatively large, for example equal to or larger than 4 $\mu$m, the concentration of $NH_{3(aq)}$ may be controlled to be at the higher end of within the range of between 1.0 g/l and 13.0 g/l; for example the concentration of $NH_{3(aq)}$ may be at least 7 g/l and at most 13.0 g/l, preferably at least 10 g/l and at most 12.0 g/l, to allow a slower growth of particle size (i.e. slower precipitation), which leads to a more dense structure of the particle. As appreciated by the skilled person the NH3(aq) concentration can be measured by using a commercially available titrator, for example Metrhom 848 Titrino Plus.

In some embodiments of the method according to the present invention, during the time period T1-T2 the aqueous slurry in the reactor vessel has a temperature which is of at least 45°C, and preferably of at least 75°C, more preferably of at least or equal to 85°C. A temperature lower than 45°C may result in more porous structure of the precipitated hydroxide. In some embodiments, the temperature is at most 99 °C, preferably at most 95°C, and more preferably at most 90°. A temperature higher than 95°C may increase the difficulty in processibility. When the temperature is at least 75°C, preferably at least or equal to 80°C, more preferably at least or equal to 85°C, undesirable cracking phenomenon of the hydroxide or oxyhydroxide particle may be prevented.

In some embodiments of the method according to the present invention, the aqueous slurry comprising the hydroxide or oxyhydroxide particles of the one or more elements has a liquid fraction and a solid fraction, wherein a part of the liquid fraction is removed from the reactor vessel during the time period and wherein the solid fraction is retained in the reactor vessel during the time period T1-T2.

A narrow size distribution refers to a span value of the hydroxide or oxyhydroxide, expressed as (D90-D10)/D50, typically being in a range of <0.8.

Means for removing a part of the liquid fraction (i.e. mother liquid) of the aqueous slurry is not particularly limited. However, for example, removal of a part of the liquid fraction may be performed by using a commercially available concentrator, which may be connected to the reactor vessel and is capable of selectively removing a fraction of liquid away from the reactor vessel.

In some embodiments, after the end of the time period (T2) the aqueous slurry comprising the hydroxide or oxyhydroxide particles of the one or more elements in the reactor vessel has a solid content of the hydroxide or oxyhydroxide particles of the one or more elements which is at least 600 g/l and which is preferably at least 750 g/l; preferably the solid content is the target solid content SG(2). By choosing an optimum, maximum target solid content it may be possible to optimize the reaction throughput. As will be appreciated by the skilled person, the target solid content may be chosen such that the limitations of the used reactor and mixing setups are taken into account.

In some embodiments of the method according to the present invention, the mixing is performed with a mixing energy of at most 40 kW per m$^3$ of the aqueous slurry, preferably at most 35 kW per m$^3$ of the aqueous slurry. A mixing energy more than 40 kW per m3 may break the hydroxide or oxyhydroxide particles into smaller pieces. In some embodiments, the mixing energy is at least 5 kW per m$^3$ of the aqueous slurry, preferably at least 10 kW per m$^3$ of the aqueous slurry. The disclosed mixing energy contribute to obtaining a homogeneous reaction mixture and avoiding of particle agglomeration.

In some embodiments, $D_1$, the median particle size d50 of the seeds, is between a range of at least 0.7 $\mu$m and at most 2.5 $\mu$m and $D_2$, the target median particle size D50, is at least 3.0 $\mu$m and at most 20 $\mu$m, preferably $D_2$ is at most 10 $\mu$m, more preferably $D_2$ is at most 7 $\mu$m.

In some embodiments, $D_1$, the median particle size d50 of the seeds, is between a range of at least 3.0 $\mu$m and at most 5 $\mu$m and $D_2$, the target median particle size D50, is at least 5.5 $\mu$m and at most 20 $\mu$m, preferably $D_2$ is at most 15 $\mu$m, more preferably $D_2$ is at most 13 $\mu$m.

The disclosed median particle sizes of the seeds and target median particle sizes contribute to obtaining an excellent sphericity for the precipitated hydroxide or oxyhydroxide particles and maximizing the reaction throughput.

In some embodiments of the method according to the present invention, the seeds are particles of a hydroxide or oxyhydroxide of at least one metal element, preferably the at least one metal element comprising at least Ni. According to the invention, the metal element(s) for seed particles and for the hydroxide or oxyhydroxide particles may be different, which provides further flexibility to implement the method of the invention.

In some embodiments of the method according to the present invention, the one or more elements in the hydroxide or oxyhydroxide particles include:

- Ni in a content x, wherein 5.0 mol% $\leq$ 99 mol%,
- Co in a content y, wherein $0 \leq y \leq 30.0$ mol%, and
- Mn in a content z, wherein $0 \leq z \leq 85.0$ mol%,
- Al in a content q, wherein $0 \leq q \leq 10.0$ mol%, and
- one or more additional elements in a content r, wherein the additional elements are elements from the list of B, Ba, Ca, Cr, Fe, Mg, Mo, Nb, Si, Sr, Ti, Y, V, W, Zn, Na, S and Zr, wherein $0 \leq r \leq 5.0$ mol%, and

wherein x, y, z, q and r are contents expressed as mol% relative to the total molar content of the one or more elements in the hydroxide or oxyhydroxide particles, and wherein x+y+z+q+r = 100 mol%; preferably, wherein x $\geq$ 60.0 mol%, wherein z $\leq$ 30.0 mol%, and wherein (y+z) $\geq$ 1.0 mol%; more preferably, wherein x $\geq$ 70.0 mol%, and wherein preferably x $\geq$ 80.0 mol; or wherein z $\geq$ 50.0 mol%, and preferably wherein r $\leq$ 3.0 mol%; and/or wherein z $\geq$ 60.0 mol%; and/or wherein z $\leq$ 90.0 mol%, preferably wherein z $\leq$ 85.0 mol%. The values x,y,z,q,r are measured by Inductively Coupled Plasma (ICP) method. It can be understood that the expression $\geq$0 includes absence of element.

According to the present invention, it is also provided a method for manufacturing a powderous hydroxide or oxyhydroxide of one or more elements, wherein the method comprises I) providing an aqueous slurry according to the methods of the invention described above, II) separating the hydroxide or oxyhydroxide particles from a liquid fraction of the aqueous slurry and III) drying the separated hydroxide or oxyhydroxide particles.

During the course of manufacturing process, the hydroxide or oxyhydroxide particles from the aqueous slurry may be further partially oxidized.

For example, a precursor comprising Ni, Co and Mn in a molar ratio x:y:z can be prepared in a mixed form by precipitation reactions, with the following steps: (1) providing a seed slurry, which may be done by continuous precipitation, followed by a batch precipitation of mixed hydroxides in a reactor with a NaOH and mixed metal salt under controlled pH according to the invention as described, (2) removal of the precursor suspension and filtration, (3) drying of the filtered wet cake. In step (1) the mixed salt may be a mixed sulfate salt, and the pH may typically be between 11 and 12. Efficient precursor drying is typically conducted above 100°C for a certain time to remove most of the moistures. The typical moisture content after drying is below 1wt%, and can be measured by the well-known Karl Fischer titrimetric method at 250°C (ASTM D6869). Before drying, the precursor has a pure or ideal hydroxide crystal structure (with space group P-3m1).

In the methods according to the invention, the drying of the hydroxide precursors can be done carefully at well-defined conditions such as temperature, gas atmosphere and time - which are conditions that can interact, for example a higher drying temperature requires less time to obtain the desired product, especially for mass production scale.

The dried hydroxide or oxyhydroxide particles, i.e. powderous hydroxide or oxyhydroxide, according to the invention can be used for manufacturing a positive electrode active material. The powderous hydroxide or oxyhydroxide can be mixed with a lithium source so as to obtain a mixture. The mixture is sintered at a temperature between 650°C and 1000°C. Optionally, a heat treatment at a temperature of 105 °C to 750 °C can be performed before the mixing.

Thus, the present invention also concerns a use of the aqueous slurry comprising hydroxide or oxyhydroxide particles obtainable by a method according to the first aspect of the invention, and a use of a powderous hydroxide or oxyhydroxide obtainable according to the second aspect of the invention, for manufacturing a positive electrode active material for secondary batteries.

**Examples**

pH analysis

pH value of a sample was measured by a 780 Metrohm meter calibrated with pH 7 and pH 13 standards. The sample was cooled to 20°C and the pH was measured from the sample by lowering the pH electrode into the sample and waiting for the pH reading to be leveled.

$NH_{3(aq)}$ concentration analysis

The $NH_{3(aq)}$ concentration was measured from a reactor sample by end point titration using an instrument of Metrhom 848 Titrino Plus. One milliliter of sample solution was added to a titration vessel. 30-40 ml of deionized water and 1 ml of 1M NaOH were added. Sample was titrated to the end point by 0.1M HCl.

Solid content analysis

For the determination of the solid content of precipitated hydroxide in the aqueous slurry, a sample taken from the aqueous slurry (the "reaction mixture" in the examples) was mixed well and 10-30 ml of the mixed sample was pipetted onto the filter paper that was further filtered onto a washed and weighed 0,8 $\mu$m membrane. The filtered membrane was rinsed with DI water followed by drying and measuring the weight of the dried membrane from which the solid content, expressed as weight of the dried hydroxide per liter of the aqueous slurry in g/l was calculated.

Particle size distribution (PSD) analysis

PSD was measured using a Malvern Mastersizer 3000 with a Hydro MV wet dispersion unit after dispersing particles of a sample in an aqueous medium. To improve the dispersion of the metal hydroxide powder, sufficient ultrasonic irradiation and stirring was applied, and an appropriate surfactant was introduced. Percentile values D10, D50, and D90 are the value of the particle diameter at 10%, 50% and 90%, respectively, in the cumulative distribution. A span value of the hydroxide is a value of (D90-D10)/D50.

Example 1

Example 1.1

A starting solution was prepared by placing 6 L of DI water, 55 mL of 220 g/L $NH_3$(aq), and 1.56 L of 130 g/L seed slurry comprising seeds of $NiOH_2$ having D50 of 1.2 $\mu$m in a reactor vessel having an effective volume of 8.75 L and adjusting the temperature in the reactor vessel to 85 °C and kept at this temperature throughout the process. The volume of the seed slurry was calculated by using equation 1 below, a target solid content was 800 g/L and a target median particle size D50 was 3.9 $\mu$m.

Equation 1:

$$V(1) = \frac{V(2) \times SG(2) \times D_1^3}{SG(1) \times D_2^3} \qquad (equation\ 1)$$

wherein V(1) is a volume of the seed slurry, V(2) is an effective volume of a reactor vessel, SG(2) is a target solid content of the aqueous slurry, $D_1$ is a median seed particle size d50, SG(1) is a solid content of a seed slurry and $D_2$ is a target median particle size D50.

Next, a precipitation reaction was performed by adding 120 g/L metal sulfate solution comprising Ni, Mn, and Co (in a stoichiometric molar ratio, Ni:Mn:Co of 65:15:20), 220 g/L $NH_3$(aq), and 230 g/L NaOH solution, and while mixing with a power density of around 30 kW/m$^3$ for the first 30 hours and with a power density of around 20 kW/m$^3$ for the rest of the process. A feed rate of the metal sulfate solution was 450 mL/h for the first two hours and 980 mL/h for the rest of the process. During the reaction the NaOH solution was added so that a pH value of the reaction mixture in the reactor vessel was kept steady at 11.8 $\pm$ 0.1 and a feed rate of the $NH_{3(aq)}$ was adjusted so that a $NH_{3(aq)}$ concentration of the reaction mixture was kept at 2 to 3 g/L. A reactor sample of the reaction mixture was taken every two hours and the D50 was measured from it. The process was stopped when the D50 of the reactor sample reached the target value of 3.9 $\mu$m, a duration of the process was 36 h. A part of a liquid fraction of the reaction mixture was pumped out from the reactor during the process by using a concentrator and a solid content of the reaction mixture, which is an aqueous slurry comprising hydroxide particles, in the reactor vessel was around the target solid content of 800 g/L in the end of the process.

The reaction mixture from example 1.1 may be proceeded to drying, or may be served as seed source for further precipitation, for example as described in example 1.2.

Example 1.2

A starting solution was prepared by placing 6 L of DI water, 350 mL of 220 g/L $NH_3$(aq), and 515 mL of 800 g/L seed slurry comprising seed particles of $Ni_{65}Mn_{15}Co_{20}(OH)_2$ having D50 of 4.0 $\mu$m were added in a reactor vessel having an effective volume of 8.75 L and adjusting the temperature in the reactor vessel to 85 °C and kept at this temperature throughout the process. The volume of the seed slurry was calculated by using equation 1 above, a target solid content was 780 g/L and a target median particle size D50 was 10.2 $\mu$m.

Next, a precipitation reaction was performed by adding 120 g/L metal sulfate solution comprising Ni, Mn, and Co (in a stoichiometric molar ratio, Ni:Mn:Co of 65:15:20), 220 g/L $NH_3$(aq), and 230 g/L NaOH solution, and while mixing with a power density of around 30 kW/m$^3$ for the first 6 hours and with a power density of around 20 kW/m$^3$ for the rest of the process. A feed rate of the metal sulfate solution was 600 mL/h in the beginning and increased continuously all the time according to equation 2 below being 3700 mL/h in the end of the process to keep the particle growth rate constant at 0.4 $\mu$m/h.

Equation 2:

$$f_{flow\ rate}(t) = \frac{m_1 \left( \left( \frac{G(t) \cdot \Delta t + D'50}{D'50} \right)^3 - 1 \right) \cdot M_{Me}}{\Delta t \cdot c_{Me} \cdot M_{Me(OH)_2}} \qquad (equation\ 2)$$

wherein $m_1$ is a mass (grams) of the seed particles provided in the reactor vessel, $G(t)$ is a growth rate of the hydroxide particle at the time instant t, wherein the value of G(t) is nonzero, $\Delta t$ is the time period T1-T2, $D'50$ the median particles size of the seed particles expressed in $\mu$m, and $M_{Me}$ is a molar mass of the one or more elements (grams/mol), $c_{Me}$ is the concentration of the one or more elements (grams/L), and $M_{Me(OH)2}$ is a molecular mass of the hydroxide of the one or more elements (grams/mol).

During the reaction a feed rate of the NaOH solution was adjusted so that a pH value of the reaction mixture in the reactor vessel was kept steady at 11.8 ± 0.1 and a feed rate of the NH3(aq) was adjusted so that a $NH_{3(aq)}$ concentration in the reaction mixture was kept steady at 12.0 ± 1 g/L. A reactor sample of the reaction mixture was taken every two hours and the D50 was measured from it. The process was stopped when the D50 of the reactor sample reached approximately the target value of 10.2 μm, a duration of the process was 15 h. A part of a liquid fraction of the reaction mixture was pumped out from the reactor during the process by using a concentrator and a solid content of the reaction mixture, which is an aqueous slurry comprising hydroxide particles, in the reactor vessel was around the target solid content of 780 g/L in the end of the process.

Example 2

Example 2.1

A starting solution was prepared by placing 6 L of DI water, 55 mL of 220 g/L NH$_3$(aq), and 410 mL of 130 g/L aqueous slurry comprising seed particles of $NiOH_2$ having D50 of 1.2 μm in a reactor vessel having an effective volume of 8.75 L and adjusting the temperature in the reactor vessel to 85 °C and kept at this temperature throughout the process. The volume of the seed slurry was calculated by using equation 1 above, a target solid content was 440 g/L and a target median particle size D50 was 5.0 μm.

Next, a precipitation reaction was performed by adding 120 g/L metal sulfate solution comprising Ni, Mn, and Co (in a stoichiometric molar ratio, Ni:Mn:Co of 94:03:03), 220 g/L NH$_3$(aq), and 230 g/L NaOH solution, and while mixing with a power density of around 33 kW/m$^3$ for the first 30 hours and with a power density of around 30 kW/m$^3$ for the rest of the process. A feed rate of the metal sulfate solution was 450 mL/h for the first two hours and 980 mL/h for the rest of the process. During the reaction the NaOH solution was added so that a pH value of the reaction mixture in the reactor vessel was kept steady at 11.8 ± 0.2 and a feed rate of the $NH_{3(aq)}$ was adjusted so that a $NH_{3(aq)}$ concentration of the reaction mixture was kept at 2 to 3 g/L. A reactor sample of the reaction mixture was taken every two hours and the D50 was measured from it. The process was stopped when the D50 of the reactor sample reached the target value of 5.0 μm, a duration of the process was 48 h. A part of a liquid fraction of the reaction mixture was pumped out from the reactor during the process and a solid content of the reaction mixture, an aqueous slurry comprising hydroxide particles, in the reactor vessel was around the target solid content of 440 g/L in the end of the process.

The reaction mixture from example 2.1 may be proceeded to drying, or may be served as seed source for further precipitation, for example as described in example 2.2.

Example 2.2

A starting solution was prepared by placing 6 L of DI water, 350 mL of 220 g/L NH$_3$(aq), and 447 mL of 440 g/L aqueous slurry comprising seeds particles of $Ni_{94}Mn_{03}Co_{03}(OH)_2$ having D50 of 5.0 μm were added in a reactor vessel having an effective volume of 8.75 L and adjusting the temperature in the reactor vessel to 85 °C and kept at this temperature throughout the process. The volume of the seed slurry was calculated by using equation 1 above, a target solid content was 180 g/L and a target median particle size D50 was 10.0 μm.

Next, a precipitation reaction was performed by adding 120 g/L metal sulfate solution comprising Ni, Mn, and Co (in a stoichiometric molar ratio, Ni:Mn:Co of 94:03:03), 220 g/L NH$_3$(aq), and 230 g/L NaOH solution, while mixing with a power density of around 30 kW/m$^3$ for the first 6 hours and with a power density of around 20 kW/m$^3$ for the rest of the process. A feed rate of the metal sulfate solution was 540 mL/h in the beginning and increased continuously all the time according to equation 2 above to keep the particle growth rate constant at 0.5 μm/h. During the reaction a feed rate of the NaOH solution was adjusted so that a pH value of the reaction mixture in the reactor vessel was kept steady at 11.7 ± 0.1 and a feed rate of the $NH_{3(aq)}$ was adjusted so that a $NH_{3(aq)}$ concentration in the reaction mixture was kept steady at 12.0 ± 1 g/L. A reactor sample of the reaction mixture was taken every two hours and the D50 was measured from it. The process was stopped when the D50 of the reactor sample reached approximately the target value of 10.0 μm, a duration of the process was 11 h. A part of a liquid fraction of the reaction mixture was pumped out from the reactor during the process and a solid content of the reaction mixture in the reactor vessel was around the target solid content of 180 g/L in the end of the process.

**Claims**

1. A method for manufacturing an aqueous slurry comprising hydroxide or oxyhydroxide particles of one or more elements, wherein the one or more elements include at least one of Ni, Co and Mn, wherein the method comprises supplying a volume of a seed slurry V(1) into a reactor vessel having an effective volume V(2), wherein the seed slurry comprises seeds having a median particle size d50 = $D_1$, and the seed slurry has a solid content SG(1) expressed as weight of seeds per volume of the seed slurry,

wherein the method subsequently comprises:

- supplying a flow of an aqueous metal salt solution comprising the one or more elements to the reactor vessel during a time period (T1-T2),
- during the time period (T1-T2), mixing the metal salt solution with an aqueous solution comprising one or more alkali hydroxides, thereby forming the aqueous slurry comprising the hydroxide or oxyhydroxide particles of the one or more elements, wherein the supplying of the seed slurry is based on equation 1:

$$V(1) = \frac{V(2) \times SG(2) \times D_1^3}{SG(1) \times D_2^3} \qquad (equation\ 1)$$

wherein SG(2) is a target solid content of the aqueous slurry expressed as weight of hydroxide or oxyhydroxide particles per volume of the aqueous slurry, and $D_2$ is a target median particle size D50 of the hydroxide or oxyhydroxide particles expressed in $\mu$m.

2. The method according to claim 1, wherein a range of pH value of the aqueous slurry in the reactor vessel is between 11.5 to 12.2, and more preferably between 11.6 to 12.1, wherein the pH of the aqueous slurry is the pH as measured on a sample of the aqueous slurry at 20°C.

3. The method according to any of the preceding claims, further comprising supplying to the reactor vessel an aqueous solution of ammonia, i.e. ammonia aqueous solution ($NH_{3(aq)}$) wherein a concentration of $NH_{3(aq)}$ in the aqueous slurry in the reactor vessel is at least 1.0 g/l and preferably at most 13.0 g/l.

4. The method according to any of the preceding claims, wherein during the time period (T1-T2) the aqueous slurry comprising the hydroxide or oxyhydroxide particles of the one or more elements in the reactor vessel has a temperature which is at least 45°C, and preferably at least 75°C, more preferably at least or equal to 85°C and which is at most 99 °C, preferably at most 95°C, and more preferably at most 90°C.

5. The method according to any of the preceding claims, wherein the aqueous slurry comprising the hydroxide or oxyhydroxide particles of the one or more elements has a liquid fraction and a solid fraction, wherein a part of the liquid fraction is removed from the reactor vessel during the time period (T1-T2) and wherein the solid fraction is retained in the reactor vessel during the time period (T1-T2).

6. The method according to any of the preceding claims, wherein after the end of the time period (T2) the aqueous slurry comprising the hydroxide or oxyhydroxide particles of the one or more elements in the reactor vessel has a solid content of the hydroxide or oxyhydroxide particles the of the one or more elements which is at least 600 g/l and which is preferably at least 750 g/l; preferably the solid content is the target solid content SG(2).

7. The method according to any of the preceding claims, wherein the mixing is performed with a mixing energy at most 40 kW per m$^3$ of the aqueous slurry, preferably at most 35 kW per m$^3$ of the aqueous.

8. The method according to any of the preceding claims, wherein $D_1$, the median particle size d50 of the seeds, is between a range of at least 0.7 $\mu$m and at most 2.5 $\mu$m and $D_2$, the target median particle size D50, is at least 3.0 $\mu$m and at most 20 $\mu$m, preferably $D_2$ is at most 10 $\mu$m, more preferably $D_2$ is at most 7 $\mu$m.

9. The method according to any of claim 1-7, wherein $D_1$, the median particle size d50 of the seeds, is between a range of at least 3.0 $\mu$m and at most 5 $\mu$m and $D_2$, the target median particle size D50, is at least 5.5 $\mu$m and at most 20 $\mu$m, preferably $D_2$ is at most 15 $\mu$m, more preferably $D_2$ is at most 13 $\mu$m.

10. The method according to any of the preceding claims, wherein the seeds are particles of a hydroxide or oxyhydroxide of at least one metal element, preferably the at least one metal element comprising at least Ni.

11. The method according to any of the previous claims, wherein the one or more elements in the hydroxide or oxyhydroxide particles include:

- Ni in a content x, wherein 5.0 mol% $\leq$ 99 mol%,
- Co in a content y, wherein $0 \leq y \leq 30.0$ mol%, and
- Mn in a content z, wherein $0 \leq z \leq 85.0$ mol%,
- Al in a content q, wherein $0 \leq q \leq 10.0$ mol%, and
- one or more additional elements in a content r, wherein the additional elements are elements from the list of B, Ba, Ca, Ce, Cr, Fe, La, Mg, Mo, Nb, Si, Sr, Ti, Y, V, W, Zn, Na, S and Zr, wherein $0 \leq r \leq 5.0$ mol%, and

wherein x, y, z, q and r are contents expressed as mol% relative to the total molar content of the one or more element in the hydroxide or oxyhydroxide particles, and wherein x+y+z+q+r = 100 mol%.

12. A method for manufacturing a powderous hydroxide or oxyhydroxide of one or more elements, wherein the method comprises I) manufacturing an aqueous slurry comprising hydroxide or oxyhydroxide particles of one or more elements according to any one of preceding claims, II) separating the hydroxide or oxyhydroxide particles from a liquid fraction of the aqueous slurry and III) drying the separated hydroxide or oxyhydroxide particles.

13. A method for manufacturing a positive electrode active material comprising 1) manufacturing a powderous hydroxide or oxyhydroxide of one or more elements according to claim 12, 2) mixing the powderous hydroxide or oxyhydroxide with a Lithium source so as to obtain a mixture, and 3) sintering the mixture at a temperature between 650°C and 1000°C.

14. Use of an aqueous slurry comprising hydroxide or oxyhydroxide particles of one or more elements obtained by a method according to any of claims 1 to 11 or a powderous hydroxide or oxyhydroxide of one or more metal elements obtained according to claim 12 for manufacturing a positive electrode active material for secondary batteries.

Figure 1

Europäisches
Patentamt

European
Patent Office

Office européen
des brevets

# EUROPEAN SEARCH REPORT

Application Number

EP 22 21 6690

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 105 027 335 A (SUMITOMO METAL MINING CO) 4 November 2015 (2015-11-04) * claims; examples * | 1-14 | INV. C01G53/00 C01G53/04 H01M4/525 |
| X | CN 109 962 237 A (HUNAN SHANSHAN ENERGY TECH CO LTD) 2 July 2019 (2019-07-02) * abstract; examples * | 1-14 | |
| X | CN 113 526 569 A (FUJIAN EVERGREEN NEW ENERGY TECH CO LTD) 22 October 2021 (2021-10-22) * abstract; examples * | 1-14 | |
| X | JP 2015 164123 A (SUMITOMO METAL MINING CO) 10 September 2015 (2015-09-10) * abstract; examples * | 1-14 | |
| | | | TECHNICAL FIELDS SEARCHED (IPC) |
| | | | C01G H01M |

The present search report has been drawn up for all claims

| Place of search | Date of completion of the search | Examiner |
|---|---|---|
| Munich | 30 June 2023 | Marucci, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 6690

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2023

| Patent document cited in search report | | Publication date | Patent family member(s) | | Publication date |
|---|---|---|---|---|---|
| CN 105027335 | A | 04-11-2015 | CN | 105027335 A | 04-11-2015 |
| | | | CN | 107954482 A | 24-04-2018 |
| | | | JP | 5626382 B2 | 19-11-2014 |
| | | | JP | 2014144894 A | 14-08-2014 |
| | | | KR | 20150115831 A | 14-10-2015 |
| | | | US | 2015364759 A1 | 17-12-2015 |
| | | | US | 2017025679 A1 | 26-01-2017 |
| | | | WO | 2014119165 A1 | 07-08-2014 |
| CN 109962237 | A | 02-07-2019 | NONE | | |
| CN 113526569 | A | 22-10-2021 | NONE | | |
| JP 2015164123 | A | 10-09-2015 | JP | 6358077 B2 | 18-07-2018 |
| | | | JP | 2015164123 A | 10-09-2015 |

EPO FORM P0459

For more details about this annex : see Official Journal of the European Patent Office, No. 12/82